# EUROPÄISCHE PATENTSCHRIFT

(11) **EP 4 142 554 B1**
(45) Veröffentlichungstag und Bekanntmachung des Hinweises auf die Patenterteilung: **27.12.2023**
(21) Anmeldenummer: 21702420.7
(22) Anmeldetag: 26.01.2021
(51) Int. Cl.: A47J 43/046, A47J 43/07, A47J 43/08

(54) **STANDMIXER MIT EINEM AUSGEWUCHTETEN ROTIERENDEN WERKZEUG**
BLENDER COMPRISING A BALANCED ROTATING TOOL
MÉLANGEUR COMPRENANT UN OUTIL ROTATIF ÉQUILIBRÉ

(30) Priorität: 28.04.2020 DE 202020102359 U
(43) Veröffentlichungstag der Anmeldung: 08.03.2023
(73) Patentinhaber: De'Longhi Braun Household GmbH, 63263 Neu-Isenburg (DE)
(72) Erfinder: PREISS, Thomas, 64297 Darmstadt (DE); KREUTZ, Norbert, 61273 Wehrheim (DE)
(74) Vertreter: Hoffmann Eitle
(86) Internationale Anmeldenummer: PCT/EP2021/051695
(87) Internationale Veröffentlichungsnummer: WO 2021/219257

(56) Entgegenhaltungen:
- EP-A1- 1 820 431
- EP-A1- 2 850 982
- DE-C1- 19 502 216
- GB-A- 1 388 119

## Beschreibung

### Technisches Gebiet

Die Neuerung betrifft einen Standmixer mit einem Behälter zum Verarbeiten von Nahrungsmitteln und einem ausgewuchteten rotierenden Werkzeug.

Eine Art solcher Werkzeuge sind Messerklingen, die insbesondere in stationären Geräten zum Zerkleinern von Nahrungsmitteln eingesetzt werden. Werkzeuge dieses Typs sind im Allgemeinen so ausgelegt, dass sie mit hohen Drehzahlen rotierend angetrieben werden können. Insbesondere für sehr schnell laufende Arbeitswerkzeuge tritt mit zunehmenden Drehzahlen verstärkt das Problem einer dynamischen Unwucht auf, wodurch ein solches Arbeitsgerät in starke Vibrationen versetzt werden kann.

Dieses Problem der Unwucht tritt nicht nur aufgrund von Fertigungstoleranzen auf, sondern auch durch die Anordnungen der Messer-Arme bzw. der Messerklingen, welche üblicherweise nicht in einer Ebene verlaufend angeordnet, sondern in Richtung der Antriebs- oder Rotation-Achse gesehen in zueinander versetzten Ebenen verlaufen, sodass die jeweiligen Schneidmesser in unterschiedlichen Ebenen beim Zerkleinern der Nahrungsmittel laufen.

Die Unwuchten und Vibrationen beeinträchtigen nicht nur die Sicherheit der Standmixer, wenn diese mit hohen Drehzahlen betrieben werden, sondern belasten auch die Lager übermäßig, was zudem zu einer starken Erwärmung führen kann, welche sich auf die zu zerkleinernden Nahrungsmittel überträgt. Außerdem kann der unrunde Lauf des Schneidmessers zu einer unerwünscht hohen Geräuschentwicklung führen.

Um einen effizienten und effektiven Bearbeitungsprozess in einem Standmixer zu gewährleisten, ist es ferner wichtig, dass das zu bearbeitende Nahrungsmittel ungehindert, in ausreichender Menge und optimal durchmischt mit dem Werkzeug in Kontakt treten kann. Ein entsprechend optimierter Nahrungsmittel-Materialfluss innerhalb des Standmixers ist daher unerlässlich und setzt eine konstruktive Gestaltung des Werkzeugs voraus, sodass im Bearbeitungsraum des Standmixers möglichst nur Komponenten verbaut sind, die notwendigerweise im Zuge des Bearbeitungsprozesses direkt mit dem Nahrungsmittel in Kontakt tretenden sollen.

### Stand der Technik

Um die oben beschriebene Unwucht eines rotierenden Schneidwerkzeugs auszugleichen ist aus der DE 195 02 216 C1 ein Schneidmesser, insbesondere zur Zerkleinerung von Lebensmitteln, zur Befestigung an einer schnelllaufenden Antriebswelle bekannt. Um ein Schneidmesser so auszubilden, dass trotz zueinander versetzten Schneidebenen ein unwuchtfreier Lauf gewährleistet ist, sind die Messer-Tragearme jeweils zu einem der Achse benachbarten freien Bereich zu der Ebene des (der) anderen Tragearms (Tragearme) hin gebogen, und bildet der gebogene Bereich eine Ausgleichsmasse zu dem freien Ende des (der) anderen Tragearms (Tragearme), wobei die Ausgleichsmassen der Tragearme derart bemessen sind, dass der Gesamtschwerpunkt des Schneidmessers in der Rotations-Achse liegt.

Darüber hinaus wird in der EP 1 820 431 A1 ein Werkzeug mit einer Nabe offenbart, die auf einer rotierenden Antriebswelle einer Lebensmittelzubereitungsvorrichtung montiert ist. Ein Messer ist mit Schneidklingen versehen, wobei das Messer so in die Nabe integriert ist, dass die Klinge radial von der Nabe vorsteht und ein Ausgleichsgewicht des Werkzeugs aufweist. Die Nabe hat ein Gehäuse zur Aufnahme des Gewichts, das an der Nabe befestigt ist, wobei die Nabe einen Körper und eine Abdeckung aus Kunststoff aufweist.

Weitere rotierende ausgewuchtete Schneidwerkzeuge zum Zerkleinern von Nahrungsmitteln sind aus der DE 196 46 329 A1, FR 2 998 466 A1 und JP H04 40919 bekannt.

Messerwellen in einem Standmixer erreichen häufig eine besonders gute Zerkleinerungsleistung, wenn die mindestens zwei Messerklingen auf der Welle in unterschiedlichen Höhen angebracht werden. So entstehen unterschiedliche Schneidlinien, die zu einer schnelleren und feineren Zerkleinerung der Lebensmittel führen.

Nachteil dieser versetzten Anordnung von beispielsweise zwei Messerklingen ist, dass diese Messerwelle nicht mehr ohne Weiteres vollständig ausgewuchtet werden kann. Zwar lässt sich durch geeignete Masseverteilung über die Messerklingen ein statisch ausgewuchteter Rotor entwerfen, allerdings verbleibt je nach Versatzhöhe zwischen den Messerklingen eine erhebliche dynamische Unwucht, die zu großen Deviationsmomenten im Betrieb bei hohen Drehzahlen führt.

Diese Deviationsmomente verursachen neben einer hohen Geräuschentwicklung durch Geräteschwingungen eine große radiale Lagerbelastung, die schnell zu unzulässig hoher Lagertemperatur und damit zur Zerstörung der Lagereinheit führen kann. Des Weiteren ist die so belastete Lagereinheit großem Verschleiß unterworfen, was die Lebensdauer stark einschränkt.

Zum Ausgleich dieser dynamischen Unwucht werden in der Regel Ausgleichsmassen an der Messerwelle im Verarbeitungsbereich des Mixers positioniert, welche die Leistung des Standmixers verschlechtern und das allgemeine Handling erschweren.

Die GB 1 388 119 A ist Stand der Technik, welcher den Oberbegriff des Anspruchs 1 bildet. Die EP 2 850 982 A1, EP 1 820 431 A1 und DE 195 02 216 C1 sind weiterer Stand der Technik.

### Darstellung der Erfindung

Der Erfindung liegt daher die Aufgabe zugrunde, einen Standmixer mit einem ausgewuchteten rotierenden Werkzeug zur Verfügung zu stellen, wobei sowohl die Leistung des Werkzeugs erhöht als auch das allgemeine Handling des Standmixers verbessert ist.

Erfindungsgemäß wird diese Aufgabe durch eine Vorrichtung mit den Merkmalen des Anspruchs 1 gelöst. In den Unteransprüchen finden sich vorteilhafte Ausgestaltungen und Verbesserungen der Erfindung.

Der Erfindung liegt dabei insbesondere die Erkenntnis zugrunde, dass eine reduzierte konstruktive Gestaltung des Werkzeugs und der Werkzeugwelle, welche nur für den Verarbeitungsprozess des Nahrungsmittels optimiert sind, den Kontakt zwischen dem zu verarbeitenden Nahrungsmittel und dem Werkzeug verbessert und das allgemeine Handling des Standmixers erleichtert. Durch die Positionierung des Ausgleichsgewichts zum Auswuchten des Werkzeugs außerhalb Nahrungsmittel-Verarbeitungsbereichs ist es möglich, dass negative Effekte durch das Ausgleichsgewichts in diesem Bereich des Werkzeugs und der Werkzeugwelle für den Verarbeitungsprozess des Standmixers vermieden werden.

Unter Nutzung dieser Erkenntnisse stellt die Erfindung einen Standmixer mit einem Behälter zum Verarbeiten von Lebensmitteln, einem innerhalb des Behälters angeordneten und über eine Welle rotierbar angetriebenen Werkzeug und einem außerhalb des Behälters angeordneten Massenausgleichselement zum Auswuchten des Werkzeugs bereit.

Die Erfindung sorgt somit dafür, dass der Materialfluss des Nahrungsmittels innerhalb des Verarbeitungsbehälters zum Werkzeug nicht durch ein Massenausgleichselement am Werkzeug selbst oder an der Werkzeugwelle gestört wird. Auf diese Weise kann das Nahrungsmittel besser mit dem Werkzeug in Kontakt treten und die Bearbeitungsleistung des Werkzeugs wird erhöht. Darüber hinaus steht mehr Platz für das zu verarbeitende Nahrungsmittel innerhalb des Behälters zur Verfügung.

Ein weiterer Vorteil besteht darin, dass das Massenausgleichselement nicht direkt in Kontakt mit dem zu verarbeitenden Lebensmittel kommt und daher nicht aus einem dafür geeigneten Material bestehen muss. Für ein Massenausgleichselement, welches außerhalb des Behälters angeordnet ist, können daher auch Materialien verwendet werden, die hinsichtlich ihres Gewichts für die Verwendung als Massenausgleichselement geeigneter sind als die üblichen lebensmittelkonformen Materialien.

Des Weiteren ist es von Vorteil, dass durch die reduzierte konstruktive Gestaltung des Werkzeugs und der Werkzeugwelle ohne ein Massenausgleichselement innerhalb des Behälters das Reinigen und Spülen der Welle mit dem Werkzeug nach der Verarbeitung eines Nahrungsmittels leichter möglich ist.

Bevorzugt ist der Standmixer derart eingerichtet, dass die Welle über ein Wellenlager gelagert ist. Auf diese Weise wird ermöglicht, dass bei einem vollständig ausgewuchteten System das Wellenlager die Gewichtskraft der Welle und des Werkzeugs abstützt. Darüber hinaus können auch technisch unvermeidbare Unwuchtfliehkräfte durch das Wellenlager aufgenommen werden, wodurch diese nicht auf andere Bauteile des Mixers übertragen werden.

Bevorzugt wird weiterhin, dass die Welle außerhalb des Behälters eine lösbare Kupplung für einen Antrieb aufweist. Dadurch kann die Welle bei Bedarf vom Antrieb abgekoppelt werden. Dies hat den Vorteil, dass die Welle mit dem Werkzeug unabhängig vom Antrieb gereinigt werden kann.

In einer weiteren bevorzugten Ausführungsform ist der Standmixer derart ausgeführt, dass nach der Kupplung zunächst das Massenausgleichselement, dann ggf. das Wellenlager und dann das Werkzeug entlang der Rotationsachse der Welle angeordnet sind. Aufgrund dieser Anordnung ist das Werkzeug an einem Ende der Welle positioniert. Es ergibt sich der Vorteil, dass auf diese Weise nur das Werkzeug im Behälter positioniert werden kann und mit dem zu verarbeitenden Nahrungsmittel in Kontakt kommt, während das Massenausgleichselement außerhalb des Behälters vorgesehen ist.

Bevorzugt wird weiterhin, dass das Massenausgleichselement ein scheibenförmiges Element ist und formschlüssig mit der Welle verbunden ist. Aufgrund der scheibenförmigen Ausführung des Massenausgleichselement ist es möglich, dieses in einem Bereich zwischen die Kupplung und dem Wellenlager zu positionieren. Dies birgt den Vorteil, dass jener Bereich nur einen geringen Platzbedarf im Standmixer einnimmt. Durch die formschlüssige Ausführung ist es weiterhin vorteilhaft, dass das Massenausgleichselement positionsgenau und verdrehsicher mit der Welle verbunden ist und mit dieser entsprechend mitrotiert.

In einer weiter bevorzugten Ausführungsform ist das scheibenförmige Massenausgleichselement über einen Einflach oder einen asymmetrischen Zweiflach formschlüssig mit der Welle verbunden. Eine derartige Ausführungsform hat den Vorteil, dass die Montage des scheibenförmigen Ausgleichselements auf der Welle erleichtert wird.

In einer noch weiter bevorzugten Ausführungsform ist das scheibenförmige Massenausgleichselement durch Aufschrauben der Kupplung auf ein Außengewinde der Welle gesichert. Dadurch ist es möglich, das Massenausgleichselement bei Bedarf von der Welle entfernen zu können. Darüber hinaus muss die Montage der Kupplung nicht zwingend positionsgenau erfolgen, da das Massenausgleichselement bereits formschlüssig und positionsgenau mit der Welle verbunden ist.

In einer weiteren bevorzugten Ausführungsform des Standmixers ist das Massenausgleichselement in der Kupplung integriert. Dies hat Vorteile, dass auf ein zusätzlich zu montierendes Massenausgleichselement verzichtet werden kann, was das allgemeine Handling erleichtert.

Weiter bevorzugt wird ein Standmixer, bei dem das Werkzeug zwei Messerklingen aufweist, die zueinander versetzt an der Welle befestigt sind. Auf diese Weise sind unterschiedliche Schneidlinien im zu verarbeitenden Nahrungsmittel möglich, die zu einer schnelleren und feineren Zerkleinerung jenes führen.

Bevorzugt wird weiterhin, dass die Massenschwerpunkte der Messerklingen und des Ausgleichsgewichts in einer ersten Ebene liegen, die durch die Rotationsachse der Welle verläuft, dass die Unwucht-Fliehkräfte der Massenschwerpunkte der Messerklingen das Momentengleichgewicht um eine Achse erfüllen, die orthogonal zur ersten Ebene steht und durch einen Schnittpunkt zwischen der Rotationsachse der Welle und der Kraftachse bezogen auf dessen Fliehkraft des Massenausgleichgewichts verläuft, und die Unwucht-Fliehkräfte der Massenschwerpunkte der Messerklingen und des Massenausgleichselements ein Kräftegleichgewicht durch eine zweite Ebene erfüllen, die durch die Rotationsachse der Welle und orthogonal zur ersten Ebene verläuft. Gemäß dieser Ausgestaltung wird gewährleistet, dass nur eine Ausgleichsebene vorliegt und diese im Bereich der Kupplung liegt. Es ist dann möglich, dass nur ein einziges Massenausgleichselement in der Ausgleichsebene zum Auswuchten des Werkzeugs benötigt wird. Die Verwendung eines einzigen solchen Elements vereinfacht die Gestaltung des Standmixers erheblich. Die Fliehkräfte skalieren zwar mit dem Quadrat der Winkelgeschwindigkeit der Drehung. Da sich jedoch alle Massenschwerpunkte um die gleiche Achse drehen, haben alle die gleiche Winkelgeschwindigkeit, weshalb es möglich ist, die Gleichgewichte der Fliehkräfte und der entsprechenden Momente für den Standmixer an sich zu bestimmen, ohne dass dieser in Betrieb sein muss.

### Kurze Beschreibung der Zeichnungen

Weitere Merkmale und Vorteile der Vorrichtungen ergeben sich aus der nachfolgenden Beschreibung von Ausführungsformen unter Bezugnahme auf die beiliegenden Zeichnungen. Von diesen Zeichnungen zeigt:
- Fig. 1: eine Skizze des Standmixers mit dem abgeschraubten Behälter;
- Fig. 2: eine Skizze der Messerklingen und der Welle des Standmixers;
- Fig. 3: eine Explosionsdarstellung der formschlüssigen Verbindung zwischen der Welle und dem scheibenförmigen Massenausgleichselement;
- Fig. 4: eine schematische Skizze der geometrischen Verhältnisse des Standmixers; und
- Fig. 5: eine schematische Skizze der geometrischen Verhältnisse des Standmixers.

### Beschreibung von Ausführungsformen

Es ist für den Fachmann ersichtlich, dass einzelne, jeweils in verschiedenen Ausführungsformen beschriebene Merkmale auch in einer einzigen Ausführungsform umgesetzt werden können, sofern sie nicht strukturell inkompatibel sind. Gleichermaßen können verschiedene Merkmale, die im Rahmen einer einzelnen Ausführungsform beschrieben sind, auch in mehreren Ausführungsformen einzeln oder in jeder geeigneten Unterkombination vorgesehen sein.

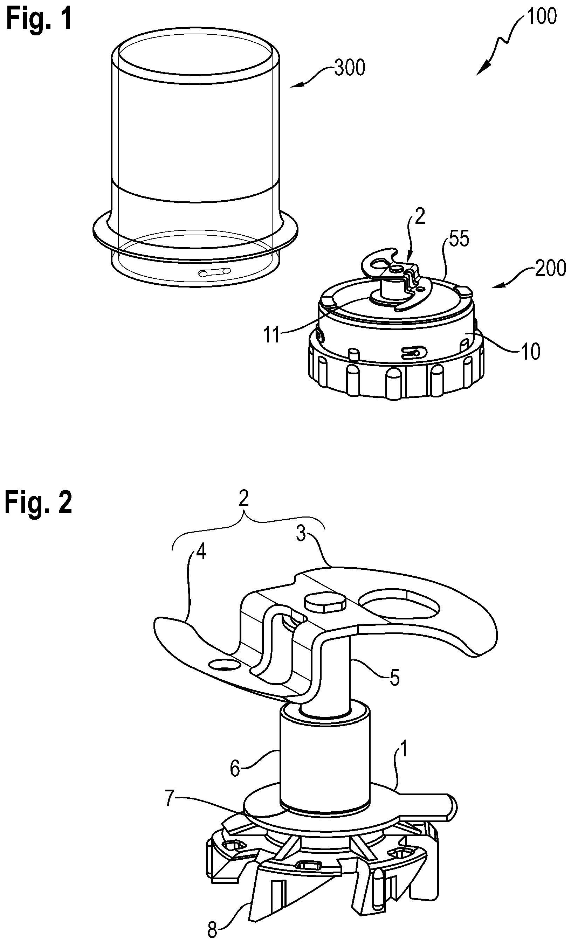

Figur 1 zeigt eine mögliche Ausführungsform des Standmixers 100, der eine Basis 200 und einen davon abgekoppelten zylindrischen Behälter 300 zum Verarbeiten von Nahrungsmitteln aufweist. Der Behälter 300, der nicht auf eine zylindrische Form beschränkt ist, und die Basis 200 können beispielsweise mit Hilfe einer Schraub- und/oder Steckverbindung miteinander gekoppelt werden. Auch eine Bajonettverbindung ist möglich. Auf diese Weise kann zum Befüllen des Standmixers 100 der Behälter 300 von der Basis 200 entkoppelt, während des Bearbeitungsprozesses durch Koppeln ein geschlossener Bearbeitungsraum eingerichtet und zum Entleeren des Behälters 300 die Basis wieder entkoppelt werden. Vorzugsweise wird der Bearbeitungsraum an der Kontaktfläche zwischen Behälter 200 und Basis 300 mit Hilfe eines Dichtungsrings 55 gegenüber der Umgebung abgedichtet.

Die Basis 200 des Standmixers weist ein rotierendes Werkzeug 2 zum Bearbeiten von Nahrungsmitteln auf, welches so angeordnet ist, dass es sich innerhalb des Behälters 300 befindet, wenn dieser mit der Basis 200 gekoppelt ist. Mit anderen Worten rotiert das Werkzeug 2 während des Bearbeitungsprozesses des Nahrungsmittels in einem inneren Bereich des Behälters 300. Oder anders ausgedrückt, die begrenzenden Flächen des Behälters 300 umschließen das Werkzeug 2 und das Nahrungsmittel beim Bearbeiten.

Die Figur 2 zeigt das Werkzeug 2 aus Figur 1 in vergrößerter Ansicht. Jenes ist vorzugsweise am Ende einer rotierbaren Welle 5, insbesondere lösbar, befestigt. Das Werkzeug 2 ist gemäß der vorliegenden Ausführungsform beispielsweise mit zwei Messerklingen 3, 4 ausgestattet, die in zueinander versetzten Ebenen entlang der Rotationsachse der Welle 5 verlaufen, sodass die jeweiligen Messerklingen 3, 4 in unterschiedlichen Ebenen beim Zerkleinern der Nahrungsmittel laufen. Die Anzahl der Messerklingen und deren Form kann je nach zu verarbeitendem Nahrungsmittel variieren und auf den Bearbeitungsprozess angepasst werden. Darüber hinaus kann das Werkzeug 2 auch beispielsweise so gestaltet sein, dass es zusätzlich für eine optimale Durchmischung des zu bearbeitenden Nahrungsmittels während des Zerkleinerungsprozesses sorgt.

Die Welle 5 ist vorzugsweise über ein Wellenlager 6 gelagert, welches sich entlang der Rotationsache der Welle 5 unterhalb des Werkzeugs 2 befindet und die Welle 5 umschließt. Der Teil der Welle 5, welcher zwischen dem Wellenlager 6 und dem Werkzeug 2 liegt, ist ebenfalls während des Bearbeitungsprozesses innerhalb des Behälters 300 angeordnet. Wie in Figur 1 gezeigt, ist es außerdem möglich, dass sich zumindest ein Teil des Wellenlagers 6 innerhalb des Behälters 200 befindet, während der andere Teil des Wellenlagers 6 im Gehäuse 10 der Basis 200 angeordnet ist. Das Gehäuse 10 der Basis 200 weist auf der dem Behälter 300 zugewandten Seite eine Öffnung 11 auf, welche das Wellenlager 6 formschlüssig umgibt, sodass während des Bearbeitungsprozesses das verarbeitete Nahrungsmittel nicht in das Innere des Gehäuses 10 der Basis 200 gelangen kann.

Entlang der Rotationsachse ist insbesondere unterhalb des Wellenlagers 6 zunächst ein scheibenförmiger Gleitring 7 und anschließend ein Massenausgleichselement 1 angeordnet, welches in dieser Ausführungsform scheibenförmig ausgeführt ist. Noch weiter unterhalb entlang der Rotationsachse befindet sich eine Kupplung 8, die mit einem nicht gezeigten Antrieb koppelbar ist. Damit befinden sich, wie bereits im oberen Abschnitt erwähnt, neben dem zumindest einen Teil des Wellenlagers 6 auch der Gleitring 7, das scheibenförmige Ausgleichselement 1 und die Kupplung 8 im Inneren des Gehäuses 10 der Basis 200 und sind folglich nicht mit dem zu verarbeitenden Nahrungsmittel innerhalb des Bearbeitungsraums in Kontakt.

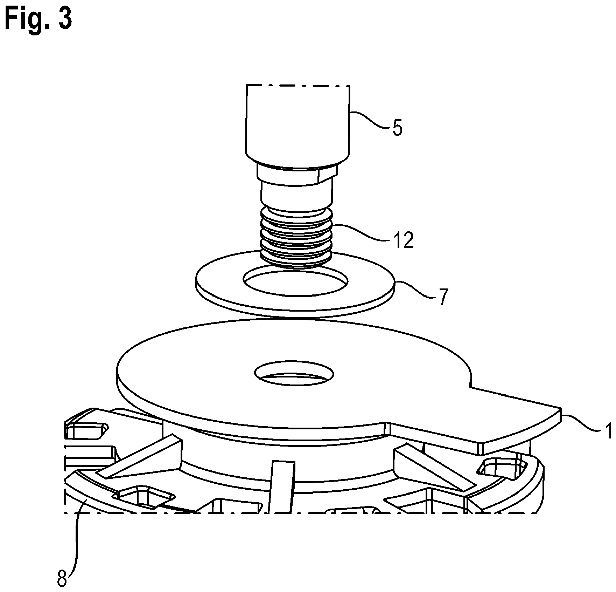

Die Figur 3 zeigt eine Explosionsdarstellung der formschlüssigen Verbindung zwischen der Welle 5 und dem scheibenförmigen Massenausgleichselement 1. Das Ende der Welle 5 ist insbesondere mit einem Außengewinde 12 versehen, welches in ein passendes Innengewinde der Kupplung 8 schraubbar ist. Im scheibenförmigen Massenausgleichselement 1 ist eine Öffnung ausgebildet, welche beispielsweise die Form eines Einflachs oder asymmetrischen Zweiflachs aufweist. Entlang der Rotationsachse der Welle 5 ist oberhalb des Außengewindes 12 eine Wellenabschnitt so ausgeformt, dass dieser als Gegenstück formschlüssig mit der als Einflach oder asymmetrischer Zweiflach ausgebildeten Öffnung des scheibenförmigen Massenausgleichselement 1 durch Aufstecken des scheibenförmigen Massenausgleichselements auf die Welle 5 verbindbar ist.

Im zusammengesetzten Zustand ist das scheibenförmige Massenausgleichselement 1 formschlüssig mit der Welle 5 verbunden und durch die aufgeschraubte Kupplung auf der Welle 5 gesichert. Auf diese Weise wird ermöglicht, dass das scheibenförmige Massenausgleichselement 1 formschlüssig mit der Kupplung und der Welle mitrotiert. Der scheibenförmige Gleitring 7 ist insbesondere entlang der Rotationsachse der Welle 5 zwischen dem Wellenlager 6 und dem scheibenförmigen Massenausgleichselement 1 positioniert, sodass keine Kontaktfläche zwischen dem Wellenlager 6 und dem scheibenförmigen Massenausgleichselement 1 vorhanden ist.

Am äußeren Bereich des scheibenförmigen Massenausgleichselement 1 befindet sich insbesondere ein Element mit einer definierten Masse, sodass die ansonsten kreisförmige Form des Massenausgleichselements an dieser Stelle unterbrochen ist. In der vorliegenden Ausführungsform ist dies vorzugsweise ein rechtwinkliger Steg, der am äußeren radialen Ende eines Kreises 1 ausgebildet ist.

In einer nicht gezeigten Ausführungsform kann dies beispielsweise auch durch Materialanhäufung an einer Stelle der Oberfläche des Massenausgleichselements 1 realisiert werden. Die Masse des entsprechenden Elements entspricht dabei der Ausgleichsmasse zum Auswuchten des Werkzeugs 2. Sind unterschiedliche auszuwuchtende Werkzeuge 2 in einem Standmixer montierbar, ist es insbesondere möglich, die scheibenförmige Massenausgleichselemente 1 korrespondierend zu tauschen.

In einer nicht gezeigten Ausführungsform ist anstelle des scheibenförmigen Massenausgleichselement ein Massenausgleichselement in der Kupplung 8 integriert. Dieses Massenausgleichselement kann beispielsweise durch eine einseitige Materialanhäufung an einer Kunststoffkupplung ausgebildet sein oder in Form eines Ausgleichsgewichts in eine entsprechend vorgesehen Tasche/Aufnahme der Kupplung 8 eingeführt werden. Weiter vorzugsweise können verschiedene Ausgleichsgewichte passend zum entsprechenden Werkzeug 2 in die Tasche/Aufnahme eingesetzt werden.

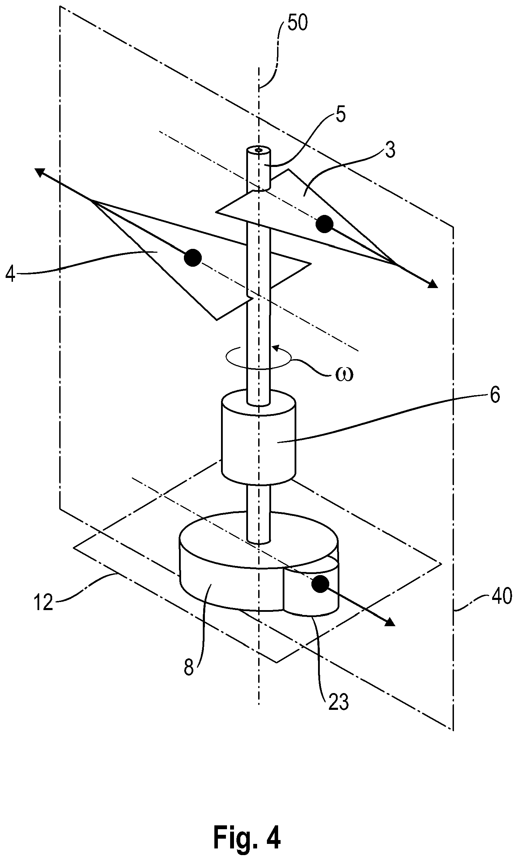

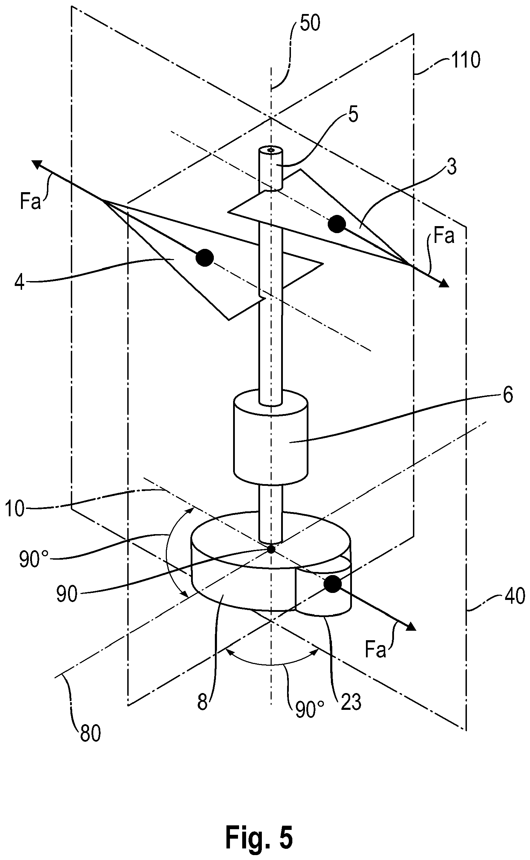

Die Figur 4 und 5 zeigen schematisch die geometrische Anordnung der Welle 5, des Werkzeugs 2 mit den Messerklingen 3, 4, der Kupplung 6 und des Massenausgleichselements 23, sodass der Standmixer vollständig ausgewuchtet ist. Nachdem das Massenausgleichselement 23 außerhalb des Bearbeitungsbereichs des Standmixers positioniert werden soll, wird nur eine Ausgleichsebene verwendet, welche in der Kupplungsebene 12 der Messerwelle 5 liegt. Um nur diese eine Ausgleichsebene zum Massenausgleich zur vollständigen Auswuchtung nutzen zu können, muss die gesamte Messerwelle im Hinblick auf die Massenverteilung so konstruiert werden, dass der auswuchttechnische Sonderfall eintritt, dass bereits ein Massenausgleichselement 23 zur vollständigen Auswuchtung des Rotors mit dem Werkzeug 2 ausreicht.

Die Einzelschwerpunkte der Messerklingen 3, 4 und des Massenausgleichsgewichts liegen dazu in einer Ebene 40 durch die Drehachse 50. Die Unwuchtfliehkräfte der Einzelschwerpunkte der Messerklingen 3, 4 erfüllen zudem das Momentengleichgewicht um die Achse 80, die orthogonal zur Ebene 4, in der alle Schwerpunkte liegen, steht und durch den Schnittpunkt 90 zwischen der Drehachse 50 und Kraftachse 10 des Massenausgleichsgewichts 23 läuft.

Die Unwuchtfliehkräfte der Einzelschwerpunkte der Messerklingen 3, 4 sowie die des Ausgleichsgewichts 23 erfüllen das Kräftegleichgewicht durch die Ebene 110, die durch die Drehachse 55 und senkrecht zur Ebene 4, in der alle Schwerpunkte liegen, verläuft. Bei vorgegebenem Schwerpunktradius ergibt sich daraus die Masse des Massenausgleichselements 23, bzw. der Schwerpunktradius bei vorgegebener Masse des Massenausgleichselements 23.

Alle Berechnungen setzen voraus, dass die radialen Lagerkräfte der Wellenlagerung zu Null gesetzt werden, sodass bei einem vollständig ausgewuchteten System nur noch die Gewichtskraft der Messerwelle axial abgestützt werden muss. Auch wenn die Ansprüche vorliegend auf einen Standmixer gerichtet sind, kann die Erfindung auch mit anderen Vorrichtungen, die nicht in den Umfang der Ansprüche fallen,zum Beispiel in Gewürzmühlen, in Rührgeräten (z.B. Küchenmaschinen) oder in Krügen, in denen Lebensmittel zerkleinert werden, eingesetzt werden.

## Patentansprüche

1. Standmixer mit:
einem Behälter (300) zum Verarbeiten von Lebensmitteln,
einem innerhalb des Behälters (300) angeordneten und über eine Welle (5) rotierbar angetriebenen Werkzeug (2), **gekennzeichnet durch**
ein außerhalb des Behälters (300) angeordnetes Massenausgleichselement (1) zum Auswuchten des Werkzeugs (2).

2. Standmixer nach Anspruch 1, wobei die Welle (5) über ein Wellenlager (6) gelagert ist.

3. Standmixer nach Anspruch 1, wobei die Welle (5) außerhalb des Behälters (300) eine Kupplung (8) für einen Antrieb aufweist.

4. Standmixer nach Anspruch 1 bis 3, wobei nach der Kupplung (8), zunächst das Massenausgleichselement (1), dann ggf. das Wellenlager (6) und dann das Werkzeug (2) entlang der Rotationsachse (50) der Welle (5) angeordnet sind.

5. Standmixer nach Anspruch 1, wobei das Massenausgleichselement (1) ein scheibenförmiges Element ist und formschlüssig mit der Welle (5) verbunden ist.

6. Standmixer nach Anspruch 5, wobei das scheibenförmige Massenausgleichselement (1) über einen Einflach oder einen asymmetrischen Zweiflach formschlüssig mit der Welle (5) verbunden ist.

7. Standmixer nach Anspruch 3 und 6, wobei das scheibenförmige Massenausgleichselement (1) durch Aufschrauben der Kupplung (8) auf ein Außengewinde (12) der Welle (5) gesichert ist.

8. Standmixer nach Anspruch 1 und 3, wobei das Massenausgleichselement (23) in der Kupplung (8) integriert ist.

9. Standmixer nach einem der vorherigen Ansprüche, wobei das Werkzeug zwei Messerklingen (3, 4) aufweist, die zueinander versetzt an der Welle (5) befestigt sind.

10. Standmixer nach den Ansprüchen 1 bis 9, wobei
die Massenschwerpunkte der Messerklingen (3, 4) und des Ausgleichsgewichts (1, 23) in einer ersten Ebene (40) liegen, die durch die Rotationsachse (50) der Welle (5) verläuft, und
die Unwucht-Fliehkräfte der Massenschwerpunkte der Messerklingen (3, 4) das Momentengleichgewicht um eine Achse (80) erfüllen, die orthogonal zur ersten Ebene (40) steht und durch einen Schnittpunkt (90) zwischen der Rotationsachse der Welle und der Kraftachse (10) des Massenausgleichgewichts (1, 23) verläuft, und
die Unwucht-Fliehkräfte der Massenschwerpunkte der Messerklingen (3, 4) und des Massenausgleichselements (1, 23) ein Kräftegleichgewicht durch eine zweite Ebene (110) erfüllen, die durch die Rotationsachse (50) der Welle (5) und orthogonal zur ersten Ebene (40) verläuft.

## Claims

1. Blender with:
a container (300) to process foodstuffs,
a tool (2) arranged inside the container (300) and rotatably driven via a shaft (5), **characterised by**
a mass balance element (1) arranged outside the container (300) for balancing the tool (2).

2. Blender according to claim 1, wherein the shaft (5) is supported via a shaft bearing (6).

3. Blender according to claim 1, wherein the shaft (5) outside the container (300) has a coupling (8) for a drive.

4. Blender according to claims 1 to 3, wherein after the coupling (8), first the mass balance element (1), then, where applicable, the shaft bearing (6) and then the tool (2) are arranged along the rotation axis (50) of the shaft (5).

5. Blender according to claim 1, wherein the mass balance element (1) is a disc-shaped element and is positively connected to the shaft (5).

6. Blender according to claim 5, wherein the disc-shaped mass balance element (1) is positively connected to the shaft (5) via a monohedron or an asymmetrical dihedron.

7. Blender according to claims 3 and 6, wherein the disc-shaped mass balance element (1) is secured by screwing the coupling (8) onto an external thread (12) of the shaft (5).

8. Blender according to claims 1 and 3, wherein the mass balance element (23) is integrated in the coupling (8).
s

9. Blender according to any one of the preceding claims, wherein the tool has two knife blades (3, 4), which are fixed to the shaft (5) offset from one another.

10. Blender according to claims 1 to 9, wherein
the centres of mass of the knife blades (3, 4) and the balancing weight (1, 23) are in a first level (40), which runs through the rotation axis (50) of the shaft (5), and
the unbalance centrifugal forces of centres of mass of the knife blades (3, 4) fulfil the equilibrium of moments around an axis (80) that is orthogonal to the first level (40) and runs through an intersection point (90) between the rotation axis of the shaft and the force axis (10) of the mass balance weight (1, 23), and
the unbalance centrifugal forces of the centres of mass of the knife blades (3, 4) and the mass balance element (1, 23) fulfil an equilibrium of forces via a second level (110), which runs through the rotation axis (50) of the shaft (5) and orthogonal to the first level (40).

## Revendications

1. Mélangeur comprenant :
un récipient (300) pour la transformation de denrées alimentaires, un outil (2) disposé dans le récipient (300) et entraîné en rotation par le biais d'un arbre (5),
**caractérisé en ce que**
un élément d'équilibrage des masses (1) disposé à l'extérieur du récipient (300) pour équilibrer l'outil (2).

2. Mélangeur selon la revendication 1, dans lequel l'arbre (5) est monté par le biais d'un palier d'arbre (6).

3. Mélangeur selon la revendication 1, dans lequel l'arbre (5) présente à l'extérieur du récipient (300) un couplage (8) pour un entraînement.

4. Mélangeur selon les revendications 1 à 3, dans lequel après le couplage (8), d'abord l'élément d'équilibrage des masses (1), puis le cas échéant le palier d'arbre (6) et ensuite l'outil (2) sont disposés le long de l'axe de rotation (50) de l'arbre (5).

5. Mélangeur selon la revendication 1, dans lequel l'élément d'équilibrage des masses (1) est un élément en forme de disque et est relié par liaison de forme à l'arbre (5).

6. Mélangeur selon la revendication 5, dans lequel l'élément d'équilibrage de masses (1) en forme de disque est relié par liaison de forme par le biais d'un monoplan ou d'un biplan asymétrique à l'arbre (5).

7. Mélangeur selon les revendications 3 et 6, dans lequel l'élément d'équilibrage des masses (1) en forme de disque est fixé par vissage du couplage (8) à un filetage extérieur (12) de l'arbre (5).

8. Mélangeur selon les revendications 1 et 3, dans lequel l'élément d'équilibrage des masses (23) est intégré au couplage (8).

9. Mélangeur selon l'une quelconque des revendications précédentes dans lequel l'outil présente deux lames de couteaux (3, 4), qui sont fixées à l'arbre (5) de manière décalée l'une par rapport à l'autre.

10. Mélangeur selon les revendications 1 à 9, dans lequel
les centres de gravité des lames de couteaux (3, 4) et du contrepoids (1, 23) se situent dans un premier plan (40), qui passe par l'axe de rotation (50) de l'arbre (5), et
les forces centrifuges de déséquilibre des centres de gravité des lames de couteaux (3, 4) assurent l'équilibre des moments autour d'un axe (80), qui est perpendiculaire au premier plan (40) et qui passe par un point d'intersection (90) entre l'axe de rotation de l'arbre et l'axe de force (10) du contrepoids des masses (1, 23), et
les forces centrifuges de déséquilibre des centres de gravité des lames de couteaux (3, 4) et du contrepoids des masses (1, 23) assurent un équilibre des forces par un second plan (110), qui passe par l'axe de rotation (50) de l'arbre (5) et est perpendiculaire au premier plan (40).
